(19) Europäisches Patentamt / European Patent Office / Office européen des brevets

(11) EP 2 057 581 B1

(12) **EUROPÄISCHE PATENTSCHRIFT**

(45) Veröffentlichungstag und Bekanntmachung des Hinweises auf die Patenterteilung:
**06.01.2010  Patentblatt 2010/01**

(51) Int Cl.:
*G06K 9/00* (2006.01)        *B60Q 1/14* (2006.01)

(21) Anmeldenummer: 07817585.8

(86) Internationale Anmeldenummer:
**PCT/DE2007/001743**

(22) Anmeldetag: **27.09.2007**

(87) Internationale Veröffentlichungsnummer:
**WO 2008/064621 (05.06.2008 Gazette 2008/23)**

(54) **ERKENNUNG UND KATEGORISIERUNG VON LICHTPUNKTEN MIT EINER KAMERA IN EINER FAHRZEUGUMGEBUNG**

DETECTION AND CATEGORIZATION OF LIGHT SPOTS USING A CAMERA IN A VEHICLE ENVIRONMENT

RECONNAISSANCE ET CATÉGORISATION DE POINTS LUMINEUX AVEC UNE CAMÉRA DANS UN ENVIRONNEMENT DE VÉHICULE

(84) Benannte Vertragsstaaten:
**DE FR**

(30) Priorität: **27.11.2006  DE 102006055904**

(43) Veröffentlichungstag der Anmeldung:
**13.05.2009  Patentblatt 2009/20**

(73) Patentinhaber: **ADC Automotive Distance Control Systems GmbH**
**88131 Lindau (DE)**

(72) Erfinder:
• **HEINRICH, Stefan**
**77855 Achern (DE)**
• **FECHNER, Thomas**
**88079 Kressbronn (DE)**
• **ALMEIDA, Carlos**
**88131 Lindau (DE)**

(74) Vertreter: **Bobbert, Christiana**
**Conti Temic microelectronic GmbH**
**Patente & Lizenzen**
**Sieboldstrasse 19**
**90411 Nürnberg (DE)**

(56) Entgegenhaltungen:
WO-A-2004/034183        US-A- 6 044 166
US-A1- 2002 195 949

**Beschreibung**

Die Erfindung betrifft ein Verfahren zur Erkennung von Reflektoren, die z. B. zur Fahrbahnmarkierung am Straßenrand eingesetzt werden, und Fahrzeuglichtern mit einem Kamerasensorsystem in einer Fahrzeugumgebung. Ein solches Verfahren ist z. B. zur automatischen Fernlichtsteuerung von Kraftfahrzeugscheinwerfern anwendbar.

Eine automatische Lichtsteuerung basierend auf einem Fotosensor ist in der Offenlegungsschrift DE 19820348 beschrieben. Dazu wird im Kraftfahrzeug ein hochsensibler Fotosensor vorgesehen, der in Fahrtrichtung nach vom ausgerichtet ist. Die Scheinwerfer eines entgegenkommenden Fahrzeugs treffen auf den Fotosensor, wenn sich ein Kraftfahrzeug nähert und das Fernlicht wird ausgeschaltet. Wird wieder eine hinreichend kleine Lichtintensität vom Fotosensor detektiert, wenn das entgegenkommende Fahrzeug das eigene Fahrzeug passiert hat und sich außerhalb des Erfassungsbereichs des Fotosensor befindet, wird das Fernlicht wieder eingeschaltet.

Bei dieser sehr einfachen Methode wird nur die Lichtintensität gemessen, nicht aber die Art der "Lichtquelle" Umgebungslicht, Reflektor, Verkehrsschild, Fahrzeugscheinwerfer, Straßenbeleuchtung etc. klassifiziert wird. Dies kann zu einer Fehlfunktion der Beleuchtungssteuerung führen.

Die WO 2004/034183 offenbart ein Verfahren zur Erkennung und Kategorisierung von Lichtpunkten für ein Fahrzeug mit einem in die Fahrzeugumgebung ausgerichteten Kamerasensor, das zumindest eine erste Kategorie für ruhende angestrahlte, reflektierende Gegenstände und zumindest eine zweite Kategorie für selbststrahlende bewegte Lichter, insbesondere Fahrzeuglichter, vorsieht, wobei eine Bilderfolge der Fahrzeugumgebung aufgenommen wird, zumindest ein Lichtpunkt in der Bilderfolge verfolgt wird, und die Intensität eines verfolgten Lichtpunkts in zumindest zwei Bildern bestimmt und der zeitliche Verlauf der Intensität analysiert wird.

Die US 2002/195949 offenbart die spezifische Unterscheidung von Reflektoren und Fahrzeuglichtern aufgrund der Geschwindigkeit der Intensitätsänderung.

Die US-A-6044166 offenbart, dass für eine standortfeste Kamera die unterschiedliche Varianz der Helligkeit von reflektierenden Gegenständen (wie Spiegelungen auf der Straße) und Fahrzeuglichtern zur Unterscheidung derselben benutzt werden kann.

Aufgabe der Erfindung ist es daher, ein sicheres Verfahren zur Erkennung von Reflektoren, insbesondere solcher, die zur Fahrbahnmarkierung am Straßenrand eingesetzt werden, und Fahrzeuglichtern mit einem Kamerasensorsystem in einer Fahrzeugumgebung anzugeben.

Diese Aufgabe ist erfindungsgemäß gelöst durch ein Verfahren gemäß den unabhängigen Patentansprüchen. Vorteilhafte Weiterbildungen sind den Unteransprüchen zu entnehmen.

Es wird ein Verfahren zur Erkennung und Kategorisierung von Lichtpunkten mit einem Kamerasensor in einer Fahrzeugumgebung angeben. Es ist zumindest eine erste Kategorie für angestrahlte Reflektoren, insbesondere ruhende Reflektoren, Verkehrsschilder, usw., und zumindest eine zweite Kategorie für Fahrzeuglichter vorgesehen. Mit dem Kamerasensor wird eine Bilderfolge von der Fahrzeugumgebung aufgenommen. Wenn ein oder mehrere Lichtpunkt(e) vorhanden sind, wird zumindest ein Lichtpunkt in der Bilderfolge verfolgt (getrackt). Die Intensität eines verfolgten Lichtpunkts wird in zumindest zwei Bildern bestimmt und die Intensitätsschwankung analysiert. Lichtpunkte mit vergleichsweise hoher zeitlicher Intensitätsschwankung werden als Fahrzeuglichter und Lichtpunkte mit vergleichsweise niedriger zeitlicher Intensitätsschwankung werden als Reflektor kategorisiert.

Als Lichtpunkte werden hier leuchtende Objekte beliebiger Form bezeichnet. In einer bevorzugten Ausgestaltung der Erfindung werden nur Formen berücksichtigt, die den Formen von Reflektoren oder Fahrzeuglichtern (rund, rechteckig, etc.) entsprechen.

In einer vorteilhaften Ausgestaltung der Erfindung wird zur Analyse der zeitlichen Intensitätsschwankung eines verfolgten Lichtpunkts die Varianz bzw. Standardabweichung oder der Hub berechnet.

In einer besonderen Ausgestaltung des erfindungsgemäßen Verfahrens wird die Varianz bzw. die Standardabweichung der Intensität bezüglich eines gleitenden Mittelwerts berechnet. Dieses Vorgehen ist vorteilhaft, da die Intensität eines Lichtpunkts von der Entfernung abhängt, die sich bei einem bewegten Fahrzeug mit Kamerasensor i. d. R. kontinuierlich verändert.

Alternativ wird in einer besonderen Ausgestaltung der Erfindung die Varianz bzw. der Mittelwert bezüglich eines modellierten Verlaufs des Mittelwerts berechnet. Der modellierte Verlauf kann beispielsweise eine lineare oder polygonale Interpolation der bisherigen Messwerte sein.

In einer vorteilhaften Ausgestaltung der Erfindung wird der Verlauf Intensität von Lichtpunkten im Bild analysiert. Es kann z.B. die abstandsabhängige Intensität dazu genutzt werden. Bei einem Reflektor ist die Intensität proportional zu $1/x^4$, wobei x der Abstand zwischen Reflektor und Fahrzeug ist. Die abstandsabhängige Intensität bei einer aktiven Lichtquelle hingegen ist proportional zu $1/x^2$. Eine Entfernungsschätzung des Lichtpunkts kann mit der Kamera erfolgen.

Eine alternative Ausgestaltung des Verfahrens erkennt einen Lichtpunkt mit einer Intensität oberhalb eines ersten Schwellwerts als Fahrzeuglichter und einen Lichtpunkt mit einer Intensität unterhalb eines zweiten Schwellwerts als Reflektor. Hinter dieser Ausgestaltung steckt der Grundgedanke, dass Fahrzeugscheinwerfer eines entgegenkommenden Fahrzeugs heller im Bild abgebildet werden als Reflektoren, die das Scheinwerferlicht des eigenen Fahrzeugs reflektieren. Demnach werden Lichtpunkte mit einer Intensität oberhalb eines oberen Schwellwerts eindeutig von einem Scheinwerfer verursacht. Analog kann für einen unteren Schwellwert argumentiert werden.

In einer vorteilhaften Ausgestaltung des erfinderischen Verfahrens wird die Bewegung zumindest eines Lichtpunkts in einer Bildfolge analysiert. Die zu erwartende Bewegung eines stehenden Objekts kann aus der der Eigenbewegung des Fahrzeugs, die z. B. mit Geschwindigkeits- und Gierratenmesser bestimmt wird, ermittelt werden. Weicht die Bewegung des verfolgten Lichtpunkts von der erwarteten Bewegung für einen stehenden Lichtpunkt ab, wird der Lichtpunkt als bewegt klassifiziert. In einer weiteren Ausgestaltung der Erfindung wird der zugehörige Abstand des Lichtpunkts bestimmt. Dazu ist ein Sensor im oder am Fahrzeug vorgesehen, der die Entfernung des zumindest einen Lichtpunkts zu dem mit einer Kamera ausgerüsteten Fahrzeug bestimmt.

In einer weiteren Ausgestaltung der Erfindung wird der Nickwinkel des Fahrzeugs bestimmt. Bei einer Bewegungsanalyse der Lichtpunkte wird die Störung verursacht durch eine Nickbewegung des Fahrzeugs extrahiert. Die Nickbewegung wird bei der Auswertung der Bewegungsrichtung einer Lichtquelle wie zuvor beschrieben i. d. R. nicht berücksichtigt, da sie sich nicht ohne weiteres durch Sensoren messen lässt. In einer vorteilhaften Ausgestaltung der Erfindung wird die Nickbewegung indirekt über die Analyse der Bilddaten aus der Fahrzeugumgebung bestimmt.

Die Erfindung wird nachfolgend anhand von Ausführungsbeispielen und Abbildungen näher erläutert.

> Fig. 1: Intensitätsschwankung S aufgetragen über der Intensität I für entgegenkommende Frontschweinwerfer (oben) und Reflektoren (unten) in einem vorgegebenen Intensitätsbereich.
> Fig.2: Schematische Häufigkeitsverteilung der Intensität von Reflektoren und Fahrzeuglichtern
> Fig. 3: Nickbewegung
> Fig.4: Flussdiagramm Verfahren

Alle hier beschriebenen Merkmale können einzeln oder in einer beliebigen Kombination zur Erfindung beitragen. Ein zeitlicher Ablauf der Verfahrensschritte ist durch die hier gewählte Reihenfolge nicht zwingend vorgegeben.

## Auswahl eines geeigneten Bildausschnitts

In einem Ausführungsbeispiel der Erfindung werden Bildausschnitte (Fenster) bestimmt, in denen nach Fahrzeugen gesucht wird. Durch die Fensterverarbeitung wird der Bildverarbeitungs-Aufwand deutlich reduziert, da nicht mehr das gesamte Bild nach Fahrzeugen durchsucht werden muss. Zudem kann bei Kenntnis der Fahrspur das Fenster so auf die zu erwartete Fahrspur positioniert werden, dass Fehldetektionen vom Straßenrand vermindert werden. Die Größe des Fensters wird so gewählt, dass die gesuchten Fahrzeugobjekte hineinpassen. Es wird ein Randbereich hinzugefügt, der umso größer ist, je ungenauer die Kenntnis über die zu erwartende Fahrzeugposition ist. Die vertikale Position, Breite und die Höhe des Suchfensters wird nach einer Entfernungshypothese aus dem Wissen der Kamera-Abbildungsgleichung positioniert (siehe Abschnitt_ Analyse der Bewegung von Lichtpunkten im Bild). Die horizontale Positionierung des Fensters erfolgt aufgrund des Wissens über den Verlauf der Fahrspur vor dem Fahrzeug aus einer vorangegangenen Fahrspurbestimmung mittels Bildverarbeitung. Diese Daten werden z.B. von einem im Fahrzeug integrierten Lane Departure Warning System, Fahrerassistenzsystem (ACC), einer digitaler Karte und satellitengestützter Positionsbestimmung (z.B. aus Navigations System) oder aus einer Kursschätzung, die mittels Inertialsensorik gewonnen wird, zur Verfügung gestellt.

## Analyse der Intensität von Lichtpunkten

I) Analyse der zeitlichen Intensitätsschwankungen von Lichtpunkten

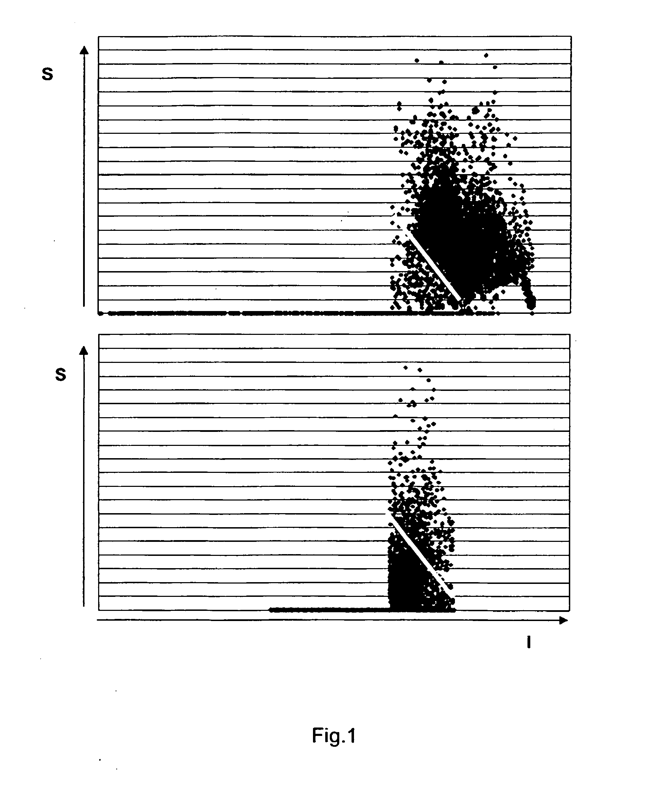

Wird ein Lichtpunkt erkannt, wird er in der Bilderfolge verfolgt (getrackt). Die Intensität eines verfolgten Lichtpunkts wird in einer Vielzahl von Bildern bestimmt und der Intensitätsverlauf wird analysiert. Von besonderem Interesse dabei ist die Schwankung der Intensität um einen Mittelwert. Da die Intensität eines Lichtpunkts von der Entfernung abhängt, die sich bei einem bewegten Fahrzeug mit Kamera i. d. R. kontinuierlich verändert, wird ein gleitender Mittelwert zur Bestimmung der Intensitätsschwankung benutzt. Eine alternative Methode, die Intensitätsschwankung darzustellen, besteht darin, den Betrag des Hubs von aufeinander folgenden Messwerten zu bestimmen. In Fig. 1 oben ist für entgenkommende Lichtquellen und in 1 unten für Reflektoren in einem vorgegebenen Intensitätsbereich die Intensitätsschwankung aufgetragen. Es ist sofort erkennbar, dass die ermittelte Intensitätsschwankung in dem vorgegebenen Intensitätsbereich für den Scheinwerfer eines entgegenkommenden Fahrzeugs im Durchschnitt deutlich größer ist als die Intensitätsschwankung für einen Reflektor. In beiden Abbildungen Figur 1 oben und 1 unten ist zur Verdeutlichung die gleiche weiße Linie eingezeichnet. In Figur 1 oben (entgegenkommende Fahrzeugscheinwerfer) befindet sich eine deutliche Überzahl der Intensitätsschwankungsgeschichte oberhalb der Linie, wohingegen in Figur 1 unten (Reflektoren zur Fahrbahnbegrenzung) die deutliche Überzahl der Varianzwerte unterhalb der Linie angeordnet ist. Die Ursache für das unterschiedliche Verhalten der Varianz ist die spezifische Rückstrahlcharakteristik von Reflektoren, die das Licht in die Richtung zurückreflektieren aus der es gekommen ist. Da Scheinwerfer und Kamerasensor in einem Kraftfahrzeug derselben Eigenbewegung des eigenen Kraftfahrzeugs unterworfen sind, ist der Einfallwinkel des reflektierten Lichts auf den Kamerachip und damit die Intensität des Lichtpunkts vergleichsweise konstant. Handelt es sich um eine Lichtquelle, so weist zumindest das eigene Fahrzeug, das Träger der Kamera ist, eine Eigenbewegung z. B. Nickbewegung auf. Der Einfallwinkel des Lichts auf den Kamerachip und damit die Intensität des Lichtpunkts im Bild ist vergleichsweise wenig konstant. Diese Eigenschaft wird zur Unterscheidung eines Reflektors von einer selbststrahlenden Lichtquelle genutzt. Es werden Lichtpunkte deren Intensitätsschwankungswerte hauptsächlich unterhalb der Grenzlinie angeordnet sind als Reflektor klassifiziert. Lichtpunkte deren Intensitätsschwankungswerte hauptsächlich oberhalb der Linie liegen werden als selbststrahlende Lichtpunkte erkannt. Der Verlauf einer solchen Grenzlinie kann fest in einem Programm zur Datenverarbeitung vorgegeben sein. Eine Alternative besteht darin, den Verlauf der Grenzlinie an vorher aufgenommene Messwerte anzupassen. Dazu werden die Varianzwerte der Lichtpunkte und ihre Klassifikation (Reflektor, selbststrahlende Lichtquelle) rückschauend, aber auch prädizierend betrachtet. Die Klassifikation kann mit Hilfe des Varianzkriteriums und/oder anderen Methoden erfolgen. Die Grenzlinie wird so berechnet, dass möglichst wenige Varianzwerte von Reflektoren oberhalb und möglichst wenige Varianzwerte von selbststrahlenden Lichtquellen unterhalb der Linie liegen.

II) Analyse der absoluten Intensität von Lichtpunkten

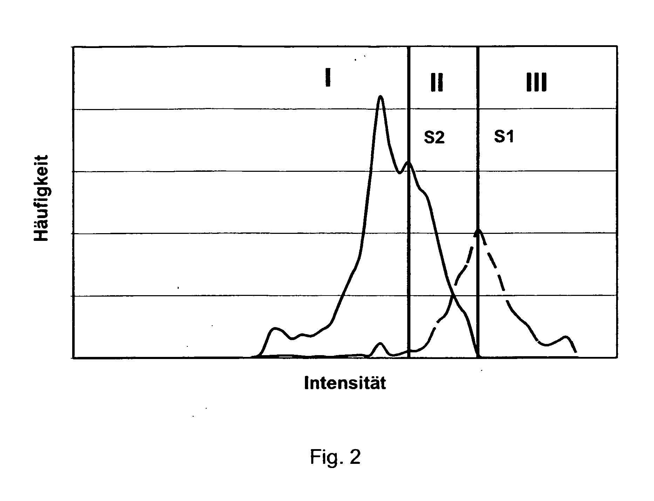

Die Intensität des von Reflektoren zurückgestrahlten Lichts der eigenen Scheinwerfer ist proportional zu $1/x^4$. Wobei x den Abstand zwischen Reflektor und Kraftfahrzeug angibt. Wohingegen die Intensität von selbststrahlenden Lichtquellen, i. d. R. Fahrzeugscheinwerfer, proportional zu $1/x^2$ ist. D. h. bei gleicher Entfernung werden Fahrzeugscheinwerfer eines entgegenkommenden Fahrzeugs heller im Bild abgebildet als Reflektoren, die das Scheinwerferlicht des eigenen Fahrzeugs reflektieren. Eine typische Häufigkeitsverteilung über der Intensität ist in Fig. 2 abgebildet. Die Häufigkeitsverteilung von selbststrahlenden Lichtquellen ist mit einer gestrichelten und die von Reflektoren mit einer durchgezogenen Linie dargestellt. Es ist deutlich erkennbar, dass die Häufigkeitsverteilungen zueinander versetzt sind. Es lassen sich in der Abbildung drei Intensitätsbereiche identifizieren. In dem mit I gekennzeichnete niedrigen Intensitätsbereich werden nur Reflektoren, in dem mit II gekennzeichneten mittleren Intensitätsbereich werden Reflektoren und selbststrahlende Lichtquellen und in dem mit III gekennzeichneten hohen Intensitätsbereich werden nur selbststrahlende Lichtquellen abgebildet. Demnach werden Lichtpunkte mit einer Intensität oberhalb eines oberen Schwellwerts S1 von einem Scheinwerfer verursacht. Lichtpunkte mit einer Intensität unterhalb eines unteren Schwellwerts S2 werden mit einer hohen Wahrscheinlichkeit von einem Reflektor verursacht. Weist ein Lichtpunkt eine Intensität auf, die zwischen den beiden Schwellwerten S1 und S2 liegt, kann mit dieser Methode keine Aussage getroffen werden, ob es sich um einen Reflektor oder eine selbststrahlende Lichtquelle handelt.

III) Analyse des Intensitätsgradienten

Zudem wird der Intensitätsverlauf des zumindest einen Lichtpunkts aufgenommen. Die Intensität des von Reflektoren zurückgestrahlten Licht der eigenen Scheinwerfer ist proportional zu $1/x^4$. Wobei x den Abstand zwischen Reflektor und Kraftfahrzeug angibt. D. h. anhand des zeitlichen Intensitätsverlaufs kann ein Lichtpunkt als passive Lichtquelle (Reflektor) oder aktive, selbststrahlende Lichtquelle klassifiziert werden. Diese Zuordnung wird in einer bevorzugten Ausgestaltung der Erfindung anhand der bestimmten Entfernung des Lichtpunkts und der Kenntnis über die Leuchtkraft der eigenen Scheinwerfer und den Reflektionseigenschaften von üblichen Reflektoren am Straßenrand verifiziert. In einer Ausgestaltung der Erfindung wird die Entfernungsbestimmung genutzt, um einen voraussichtlichen Intensitätsverlauf für eine passive und eine aktive Lichtquelle zu ermitteln und zur Verifikation genutzt werden, ob es sich um einen Reflektor oder eine aktive Lichtquelle handelt. Ebenso wird in einer bevorzugten Ausgestaltung der Erfindung wird die Intensität des gemessenen Lichtpunkts mit der erwarteten Intensität eines Frontscheinwerfers bzw. eines Rücklichts der üblichen Leuchtstärke in der bestimmten Entfernung verglichen. Die gleiche Vorhersage wird für übliche Reflektoren in der bestimmten Entfernung unter der Annahme der Bestrahlung durch die eigenen Frontscheinwerfer gemacht. Die berechneten Werte werden zur Verifikation genutzt, ob es sich um einen Reflektor oder eine aktive Lichtquelle (Fahrzeuglichter) handelt.
Es wird in dem hier angegebenen Verfahren ein Lichtpunkt als Reflektor identifiziert, wenn der zeitliche / örtliche Verlauf der Bewegung des Lichtpunkts im Wesentlichen dem Verhalten eines relativ zur Fahrbahn stehenden Objekts genügt und der zeitliche Verlauf der Intensität dem erwarteten Verlauf für eine passive Lichtquelle im Wesentlichen entspricht. Zudem wird ein Lichtpunkt als Fahrzeuglicht identifiziert, wenn der zeitliche Verlauf der Bewegung des Lichtpunkts im Wesentlichen dem Verhalten eines relativ zur Fahrbahn bewegten Objekts genügt und der zeitliche Verlauf der Intensität dem erwarteten Verlauf für eine aktive Lichtquelle im Wesentlichen entspricht.

Analyse der Bewegung von Lichtpunkten im Bild

I) Bildfluß

Zur Erkennung von Fahrzeuglichtern wird der optische Fluss von hellen punktfömigen Bildobjekten bestimmt, die mittels bekannter Methoden der Bildverarbeitung (Korrelation, morphologischer Filterung, Regionen-Segmentierung) extrahiert werden. Steht der Bildfluss dieser Bildobjekte in Einklang mit der Eigenbewegung (Geschwindigkeit, Gierbewegung) kann von stehenden Lichtpunkten ausgegangen werden. Dazu wird der hypothetische Bildfluss für unbewegte Bildpunkte in verschiedenen Entfernungen bestimmt und mit dem tatsächlichen Bildfluss der aus dem aktuellen Bild extrahierten Lichtpunkte verglichen. Ist der Bildfluss dieser Lichtpunkte im Wesentlichen durch die bekannte Eigenbewegung (Geschwindigkeit, Gierbewegung) geprägt handelt es sich um stehende Lichtpunkte. Trifft keine der Hypothesen für den gemessenen Bildfluss eines Lichtpunktes zu, dann muss es sich um ein bewegtes Licht handeln. Bei der Unterscheidung ist die ungefähre Kenntnis der Entfernung der abgebildeten Lichtpunkte zum Fahrzeug nützlich, da der Bildfluss neben der Eigenbewegung des Kamera-Fahrzeugs und der möglichen Bewegung der Lichtpunkte auch von der Entfernung der Lichtpunkte abhängt. Nahe stehende Objekte weisen einen stärkeren Bildfluss auf als entfernte stehende Objekte.

Eine Methode zur Abstandsbestimmung eines Punktes bzw. Objekts *d* mit einer Monokularkamera dargestellt. Der Abstand zur Monokularkamera wird aus *h* der Kameraeinbauhöhe, $\alpha$ dem Kameranickwinkel, *y* der Bildzeile des Punktes, $\eta$ der Pixelgröße und *f* die Kamerabrennweite zu

$$d = h \cdot \frac{1 - t \cdot \tan\alpha}{t + \tan\alpha} \quad \text{mit } t = y \cdot \frac{\eta}{f}$$

bestimmt. Sind also die vorgenannten Parameter durch eine Justage der Blickrichtung der Kamera bekannt, kann die Entfernung d bestimmt werden.

II) Störung verursacht durch die Nickbewegung des eigenen Fahrzeugs

Ein häufig auftauchendes Problem bei der Auswertung der Bewegungsrichtung einer Lichtquelle ist das Schaukeln der Karosserie des eigenen Fahrzeugs und damit der Kamera. Das führt dazu, dass der Bildfluss von Objekten nicht nur von der Geschwindigkeit und Gierbewegung des Kamera-Fahrzeugs beeinflusst wird, sondern auch von der Rotationsbewegung der Karosserie relativ zur Fahrbahnebene, der Nickbewegung des Fahrzeugs. Im Gegensatz zu Geschwindigkeit und Gierbewegung lässt sich die Nickbewegung nicht ohne weiteres durch Sensoren messen. Diese Störung tritt verstärkt bei Fahrbahnunebenheiten sowie bei Längsbeschleunigung (in positiver wie negativer Richtung) auf. Unabhängig davon, wie gut das Fahrwerk des Kamera-Fahrzeugs die dabei auftretenden Kräfte dämpfen kann, sind Störungen durch Nickbewegung immer vorhanden.

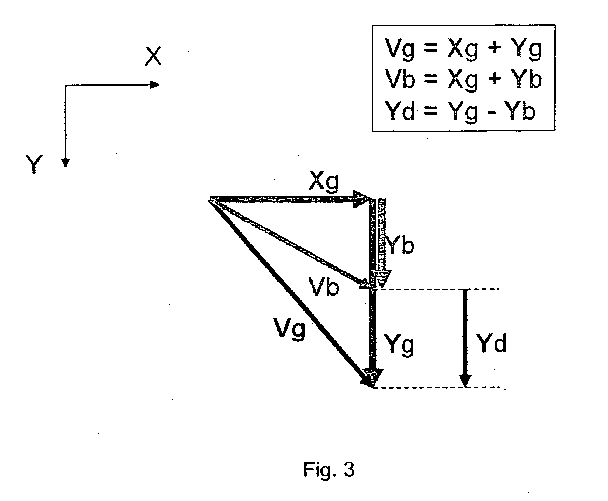

Im Folgenden wird eine Möglichkeit angegeben, die Nickbewegung zu ermitteln, um eine anschließende Kompensation zu ermöglichen. Dazu werden die Kamerabilder selbst analysiert. Taucht das Fahrwerk vom ein, neigt sich die Kamera nach unten und alle Punkte im Videobild verschieben sich entsprechend nach oben, umgekehrt bewegen sich die Punkte nach unten, wenn die Karosserie wieder zurück federt. Man kann nun ausnutzen, dass diese Bewegung im Videobild für alle Punke gleich ist und nur in vertikaler Richtung auftritt, d.h. die horizontale Bewegungskomponente der Bildpunkte bleibt von der Nickbewegung der Kamera unbeeinflusst. Unter der Annahme, dass es sich bei einem betrachteten Bildpunkt um ein stehendes Objekt handelt, kann man aus seiner Position im Bild, bekannter Geschwindigkeit und Gierbewegung des Kamera-Fahrzeugs sowie allein aus seiner horizontalen Verschiebung die Entfernung dieses Punktes zur Kamera berechnen. Ob es sich um ein stehendes oder bewegtes Objekt handelt kann z.B. anhand der Analyse der Intensität in einer Bilderfolge ermittelt werden. Kennt man die Entfernung des Punktes aus der horizontalen Verschiebung, kann man damit wiederum die zugehörige vertikale Verschiebung ermitteln. Da die horizontale Verschiebung des Punktes, wie oben erläutert, unabhängig von der Nickbewegung ist, trifft dies nun auch auf die ermittelte zugehörige vertikale Verschiebung zu. Falls die im Videobild gemessene Verschiebung jetzt durch Nickbewegung der Kamera gestört ist, erkennt man das durch eine Differenz zwischen der gemessenen und der berechneten vertikalen Verschiebung. Mit der ermittelten Nickbewegung können nun die entsprechenden Bilddaten korrigiert werden. In Figur 3 ist die Ermittlung der Nickbewegung schematisch als Vektordiagramm dargestellt. Vg repräsentiert die im Bild gemessene Gesamtverschiebung eines Objekts. Dieser Vektor lässt sich in die gemessene Gesamtverschiebung in X-Richtung Xg und in Y-Richtung Yg aufteilen. Yb bezeichnet die berechnete Verschiebung in Y-Richtung, die wie zuvor erläutert für ein stehendes Objekt berechnet wurde. Yd gibt genau die Differenz zwischen berechneter und gemessener Verschiebung in Y-Richtung und damit den Einfluss der Nickbewegung an.

<u>Verfahren zur Analyse von Lichtpunkten</u>

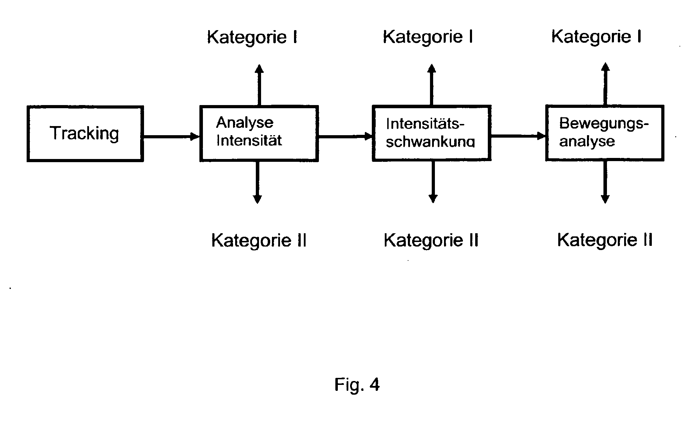

In Figur 4 ist ein Flussdiagramm abgebildet, dass ein vorteilhaftes Verfahren zur Analyse und Kategorisierung von Lichtpunkten angibt. Dabei sind die Kategorie I Reflektor und Kategorie II selbststrahlende bewegte Lichter (Fahrzeuglichter) vorgesehen. Zunächst werden die Lichtpunkte in den Kamerabildern verfolgt (getracked). Danach wird der zeitliche Verlauf der Intensität der Lichtpunkte einer Intensitätsanalyse unterzogen. Dies kann eine Analyse des Intensitätsverlaufs und/oder absoluten Intensität beinhalten. Ist hier eine eindeutige Zuordnung von Lichtpunkten zu Kategorie I oder Kategorie II möglich, ist die Kategorisierung beendet. Ist keine Zuordnung möglich wird in einem weiteren Schritt die Intensitätsschwankung von Lichtpunkten untersucht. Ist hier keine eindeutige Zuordnung eines Lichtpunkts zu Kategorie I oder Kategorie II möglich, wird in einem weiteren Schritt eine Bewegungsanalyse durchgeführt. Anhand der Bewegungsanalyse und evt. auf Basis der zuvor durchgeführten Analyseschritte wird eine Entscheidung getroffen, ob der untersuchte Lichtpunkt Kategorie I oder II zuzuordnen ist.

## Patentansprüche

1. Verfahren zur Erkennung und Kategorisierung von Lichtpunkten für ein Fahrzeug mit einem in die Fahrzeugumgebung ausgerichteten Kamerasensor, das zumindest eine erste Kategorie für ruhende angestrahlt Reflektoren, die zur Fahrbahnmarkierung am Straßenrand eingesetzt werden; und zumindest eine zweite Kategorie für selbststrahlende bewegte Lichter, insbesondere Fahrzeuglichter, vorsieht, wobei

   - eine Bilderfolge der Fahrzeugumgebung aufgenommen wird
   - zumindest ein Lichtpunkt in der Bilderfolge verfolgt (getrackt) wird
   - die Intensität eines verfolgten Lichtpunkts in zumindest zwei Bildern bestimmt und der zeitliche Verlauf der Intensität analysiert wird und
   - Lichtpunkte mit vergleichsweise hoher Intensitätsschwankung als Fahrzeuglichter und Lichtpunkte mit vergleichsweise niedriger Intensitätsschwankung als Reflektor kategorisiert werden.

2. Verfahren zur Erkennung und Kategorisierung von Lichtpunkten nach Anspruch 1,
   wobei zur Analyse der Intensitätsschwankung eines verfolgten Lichtpunkts die Varianz bzw. Standardabweichung insbesondere bezüglich eines gleitenden Mittelwerts berechnet wird.

3. Verfahren zur Erkennung und Kategorisierung von Lichtpunkten nach einem der vorhergehenden Ansprüche,
   wobei zur Analyse der Intensitätsschwankung eines verfolgten Lichtpunkts der Hub von aufeinanderfolgenden Messwerten berechnet wird.

4. Verfahren zur Erkennung und Kategorisierung von Lichtpunkten nach einem der vorhergehenden Ansprüche, wobei die Intensität von Lichtpunkten im Bild analysiert wird

5. Verfahren zur Erkennung und Kategorisierung von Lichtpunkten nach Anspruch 4, wobei Lichtpunkte mit einer Intensität oberhalb eines ersten Schwellwerts als Fahrzeuglichter und Lichtpunkte mit einer Intensität unterhalb eines zweiten Schwellwerts als Reflektor erkannt wird.

6. Verfahren zur Erkennung und Kategorisierung von Lichtpunkten nach einem der vorhergehenden Ansprüche, wobei die Bewegung der Lichtpunkte in einer Bildfolge analysiert wird, und unter Berücksichtigung der Eigenbewegung des Fahrzeugs und/oder einer Entfernungsschätzung der Lichtpunkt als stehend oder bewegt klassifiziert wird.

7. Verfahren zur Erkennung und Kategorisierung von Lichtpunkten nach einem der vorhergehenden Ansprüche, wobei der Nickwinkel des Fahrzeugs analysiert und bei einer Bewegungsanalyse der Lichtpunkte die Störung verursacht durch die Nickbewegung des Eigenfahrzeugs extrahiert wird.

8. Kraftfahrzeug mit einem Kamerasensor und Bilddaten-Verarbeitungsprogramm, in dem ein Verfahren nach Anspruch 1-7 implementiert ist.

9. Kraftfahrzeug mit einem Kamerasensor für ein Fahrerassistenzsystem, insbesondere zur Fahrspurerfassung, und Bilddaten-Verarbeitungsprogramm, in dem ein Verfahren nach Anspruch 1-7 implementiert ist.

## Claims

1. Method for detecting and categorizing light spots for a vehicle with a camera sensor directed to the surroundings of the vehicle, said method providing at least a first category for stationary illuminated reflectors used for road marking on the roadside, and at least a second category for primary light sources in motion, in particular vehicle lights, wherein

   ■ a sequence of images of the surroundings of the vehicle is recorded,
   ■ at least one light spot is tracked in the sequence of images,
   ■ the intensity of a tracked light spot is determined in at least two images, and the time history of the intensity is analyzed, and
   ■ light spots having a comparatively high intensity variation are categorized as vehicle lights, and light spots having a comparatively low intensity variation are categorized as reflectors.

2. Method for detecting and categorizing light spots according to Claim 1, wherein for analyzing the intensity variation of a tracked light spot, the variance or standard deviation, in particular with respect to a sliding average, is calculated.

3. Method for detecting and categorizing light spots according to any one of the preceding claims, wherein for analyzing the intensity variation of a tracked light spot, the deviation of consecutive measured values is calculated.

4. Method for detecting and categorizing light spots according to any one of the preceding claims, wherein the intensity of light spots is analyzed in the image.

5. Method for detecting and categorizing light spots according to Claim 4,
   wherein light spots having an intensity above a first threshold value are detected to be vehicle lights, and light spots having an intensity below a second threshold value are detected to be reflectors.

6. Method for detecting and categorizing light spots according to any one of the preceding claims, wherein the motion of the light spots in a sequence of images is analyzed, and the light spot is classified, considering the proper motion of the vehicle and/or an estimate of distance, as being stationary or as being in motion.

7. Method for detecting and categorizing light spots according to any one of the preceding claims, wherein the pitch angle of the vehicle is analyzed, and the disturbance caused by the pitch of one's own vehicle is extracted when analyzing the motion of the light spots.

8. Motor vehicle with a camera sensor and an image data processing program in which a method according to any one of Claims 1 to 7 is implemented.

9. Motor vehicle with a camera sensor for a driver assistance system, in particular for lane detection, and an image data processing program in which a method according to any one of Claims 1 to 7 is implemented.

**Revendications**

1. Procédé d'identification et de catégorisation de points lumineux pour un véhicule avec un capteur à caméra dirigé vers l'environnement du véhicule, qui prévoit au moins une première catégorie pour des réflecteurs immobiles éclairés par projection qui sont utilisés pour le marquage de voie de circulation sur le bord de la route, et au moins une deuxième catégorie pour des lumières mobiles rayonnantes, en particulier des lumières de véhicule,

   - une séquence d'images de l'environnement du véhicule étant enregistrée
   - au moins un point lumineux de la séquence d'images étant suivi (poursuivi)
   - l'intensité d'un point lumineux suivi étant définie dans au moins deux images, et l'allure dans le temps de l'intensité étant analysée et
   - des points lumineux ayant une fluctuation d'intensité comparativement élevée étant catégorisés en tant que lumières de véhicule, et des points lumineux ayant une fluctuation d'intensité comparativement faible étant catégorisés en tant que réflecteur.

2. Procédé d'identification et de catégorisation de points lumineux selon la revendication 1,
   la variance ou l'écart-type, en particulier en ce qui concerne une valeur moyenne glissante, étant calculée pour l'analyse de la fluctuation d'intensité d'un point lumineux suivi.

3. Procédé d'identification et de catégorisation de points lumineux selon une des revendications précédentes,
   l'excursion de valeurs de mesure successives étant calculée pour l'analyse de la fluctuation d'intensité d'un point lumineux suivi.

4. Procédé d'identification et de catégorisation de points lumineux selon une des revendications précédentes, l'intensité de points lumineux dans l'image étant analysée.

5. Procédé d'identification et de catégorisation de points lumineux selon la revendication 4, des points lumineux ayant une intensité supérieure à une première valeur de seuil étant identifiés en tant que lumières de véhicules, et des points lumineux ayant une intensité inférieure à une deuxième valeur de seuil étant identifiés en tant que réflecteur.

6. Procédé d'identification et de catégorisation de points lumineux selon une des revendications précédentes, le mouvement des points lumineux dans une séquence d'images étant analysé et, en prenant en considération le mouvement propre du véhicule et/ou une estimation de l'éloignement, le point lumineux étant classé en tant que fixe ou mobile.

7. Procédé d'identification et de catégorisation de points lumineux selon une des revendications précédentes, l'angle de tangage du véhicule étant analysé et, lors d'une analyse de mouvement des points lumineux, la perturbation causée par le mouvement de tangage du véhicule propre étant extraite.

8. Véhicule automobile avec un capteur à caméra et un programme de traitement de données d'image, dans lequel un procédé selon la revendication 1 à 7 est mis en oeuvre.

9. Véhicule automobile avec un capteur à caméra pour un système d'aide au conducteur, en particulier pour

**EP 2 057 581 B1**

la détection de voie de circulation, et programme de traitement de données d'image, dans lequel un procédé selon la revendication 1 à 7 est mis en oeuvre.

Fig.1

Fig. 2

$$Vg = Xg + Yg$$
$$Vb = Xg + Yb$$
$$Yd = Yg - Yb$$

Fig. 3

Kategorie I    Kategorie I    Kategorie I

| Tracking | → | Analyse Intensität | → | Intensitäts-schwankung | → | Bewegungs-analyse |

Kategorie II   Kategorie II   Kategorie II

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19820348
- WO 2004034183 A
- US 2002195949 A
- US 6044166 A